# EUROPEAN PATENT APPLICATION

(11) **EP 4 814 319 A1**
(43) Date of publication of application: **30.09.2026**
(21) Application number: 24892679.2
(22) Date of filing: 28.04.2024
(51) Int. Cl.: F16B 5/00, F16B 5/06, F16B 21/08

(54) **ELASTIC ASSEMBLY, CONNECTION COMPONENT, AND FOOTREST ASSEMBLY OF SOFA**

(30) Priority: 23.11.2023 CN 202323179235 U
(71) Applicant: Man Wah Furniture Manufacturing (Shenzhen) Co., Ltd., Shenzhen, Guangdong 518100 (CN)
(72) Inventor: CHEN, Weiming, Guangdong 516083 (CN)
(74) Representative: Cabinet Chaillot
(86) International application number: PCT/CN2024/090319
(87) International publication number: WO 2025/107513

(57) **Abstract**

This application provides an elastic component for connecting a board material (1) and a fabric, wherein the elastic component can be detachably fixed to the board material and includes a first elastic portion and a second elastic portion arranged opposite to each other, wherein the first elastic portion and the second elastic portion can be detached to one or more buckle components fixedly connected to the fabric, therefore allowing the fabric and the board material (1) to be detachably connected. This application also provides a connecting component between a board material (1) and a fabric. This application also provides a sofa leg board assembly. The structure of this application allows for easy assembly and disassembly, differing from the traditional method of nailing fabrics and board materials together. The resulting products have stable quality, are conducive to standardized and modular mass production, and the connecting structures are firm and reliable.

## Description

### Technical Field

This application relates to connecting components, specifically to an elastic component for connecting between board materials and fabrics, a connecting component, and a sofa leg board assembly utilizing the elastic component and connecting component.

### Background Technology

In the furniture field, it is commonly necessary to wrap and cover fabrics (such as sofa covers or cloth) over formed board materials or other framework structures (such as sofa leg boards, front panels, armrests, backplanes, etc.), which is the final step in the furniture manufacturing process known as the "upholstery process".

In the existing upholstery process, it is typically carried out by aligning the sewn and cut fabrics over the board materials or other framework structures, stretching the fabrics tightly, and then using a nail gun to shoot nails at the required fixing positions to secure the fabrics to the board materials. However, this traditional upholstery process has the following drawbacks: 1. It requires workers to align the fabrics and board materials manually, determine the nailing positions, and then manually complete the nailing and fixing operations. This process consumes a lot of time, resulting in low production efficiency; 2. It requires workers to have a high and stable level of upholstery skills. Even the same worker cannot achieve consistent finished products in different operations, leading to uneven products and low yield rates. Additionally, the one-to-one correspondence between fabrics and board materials makes standardized production difficult, which is unfavorable for large-scale production; and 3. The connection between the fabrics and board materials is fixed by nails, making disassembly inconvenient. If nailing errors occur during production, it becomes difficult to adjust at any time, resulting in a high number of waste parts. Moreover, it is also challenging to disassemble and maintain after shipment, making it impossible to easily remove, clean, or replace the fabrics and simply reattach them to the board materials.

To solve this problem, it is common in the field to fix clamping strips on the fabrics and achieve the tensioning and fixing between the fabrics and board materials by clamping the clamping strips onto the board materials or framework structures. For example, the structure disclosed in Chinese Utility Model Patent CN210696810U by the applicant "Man Wah Furniture Manufacturing (Huizhou) Co., Ltd.". However, in this case, the connection between the board materials and fabrics is only secured by the hook structure of the clamping strips clamping onto the surface of the board materials. This fixation effect is insufficient, and when the sizes of the board materials and fabrics are large, relative sliding and displacement quickly occurs, causing the fabrics to loosen or even detach from the board materials.

Therefore, there is a need to provide a connecting structure between board materials and fabrics that addresses at least the aforementioned issues, making the upholstery process easy to operate and highly standardized and ensuring that the resulting finished products have high quality, reliable strength, and are easy to disassemble.

### Summary of the Invention

The purpose of this application is to provide a connecting component between fabrics and board materials that, in response to the issues in the prior art, at least partially addresses problems such as inconvenient connection operations that overly rely on manual techniques, difficulties in mass production and standardization, non-detachability, and/or insecure connections. This allows fabrics and board materials to be easily connected and disassembled and ensures that the connecting components are stable and reliable, therefore improving product quality stability and facilitating mass production.

On the one hand, this application provides an elastic component for connecting board materials and fabrics. The elastic component can be detached from the board material and comprises a first elastic portion and a second elastic portion arranged relative to each other. The first elastic portion and second elastic portion can be detachably connected to one or more buckle components that are fixedly attached to the fabric, allowing the fabric and board material to be detachably connected.

The structure of this application achieves the following beneficial effects at least using the detachable coupling between the elastic component and the buckle strips arranged on the board material and fabric, respectively:
1. Allows workers or users to assemble and disassemble the board material and fabric conveniently. This process differs from traditional nailing assembly methods, ensuring the quality and stability of the finished product after assembly;
2. The relationship between the elastic component, board material, fabric, and buckle strips allow for the production of standard parts first, followed by easy assembly, therefore facilitating standardized and modular mass production;
3. The various connecting structures of this application are detachable. For example, the detachable connection between the elastic component and the buckle strips and/or the detachable connection between the elastic component and the board material. Allowing the connection status to be adjusted at any time during the manufacturing process or by the user. This not only ensures a firm, reliable, stable connection but also facilitates disassembly.

In a preferred embodiment of this application, the elastic component is configured as a clamping component, wherein the first elastic portion and the second elastic portion are respectively configured as the first clamping portion and the second clamping portion biased towards each other, and in the connected state, the clip is clamped between the first clamping portion and the second clamping portion of the respective clamping component.

In a preferred embodiment of this application, the first elastic portion and the second elastic portion are configured to be biased in a direction away from each other, and in the connected state, the clip piece is sleeved outside of both the first elastic portion and the second elastic portion, and is biased and fixed by the elastic component.

According to the embodiments, those skilled in the art can choose, as needed, to have the buckle components clamped by the elastic component or to have the buckle components enveloped externally by the elastic component.

In a preferred embodiment of this application, the elastic component also includes a base. The first clamping portion and the second clamping portion are configured as a first clamping arm and a second clamping arm extending from one side of the base in a first direction, respectively. Additionally, the clamping component includes a joint portion extending from the other side of the base in a second direction opposite to the first direction. The joint portion is designed to be detachably engaged with a receiving portion provided on one surface of the board material, therefore detachably fixing the clamping component to the board material.

In a preferred embodiment of this application, the joint portion includes: A cylindrical portion extending from the base in the second direction; one or more elastic arms arranged around the cylindrical portion and extending from the free end of the cylindrical portion toward the base orientation. Furthermore, the receiving portion is configured as a hole provided on one surface of the board material. Additionally, one or more elastic arms are configured such that when the joint portion is inserted into the corresponding receiving portion on the board material, they elastically bias against the inner side walls of the hole to at least partially prevent relative movement between the joint portion and the receiving portion.

In a preferred embodiment of this application, the joint portion further includes a free side extending from the peripheral side surface of the cylindrical portion to one or more elastic arms, and one or more elastic support arms connected to the free side.

In a preferred embodiment of this application, the joint portion and the receiving portion constitute a mutually engaging threaded rod and threaded hole structure.

On the other hand, this application provides a connecting component between board materials and fabrics. The connecting component includes one or more elastic components arranged on the board, wherein each elastic component is provided with a first elastic portion and a second elastic portion, which are oppositely arranged; one or more buckle components fixedly connected to the fabric, wherein one or more buckle components can be detachably connected to one or more elastic component, therefore allowing the fabric and board material to be detachably connected.

In a preferred embodiment of this application, the elastic component is configured as a clamping component, wherein the first elastic portion and the second elastic portion are respectively configured as the first clamping portion and the second clamping portion biased towards each other, and in the connected state, the clip is clamped between the first clamping portion and the second clamping portion of the respective clamping component.

In a preferred embodiment of this application, the first elastic portion and the second elastic portion are configured to be biased in a direction away from each other, and in the connected state, the clip piece is sleeved outside of both the first elastic portion and the second elastic portion and is biased and fixed by the elastic component.

In a preferred embodiment of this application, the first surface of the board material, which is covered by the fabric in the assembled state, is provided with one or more grooves extending along the length direction of the board material. Each groove is provided with one or more accommodating areas arranged along the direction of extension of the groove for housing one or more clamping components. One or more accommodating areas have a width in the direction transverse to the groove's direction of extension that is greater than the width of the groove. Moreover, each accommodating area is configured to house one or more clamping components.

According to this embodiment, the number, arrangement, and relative configuration of the grooves, accommodating areas, and/or clamping components can be set as needed.

In a preferred embodiment of this application, at least a portion of one or more buckle components is configured as buckle strips. In the connected state, the buckle strips are received in the corresponding grooves, extending continuously or arranged discretely along the direction of extension of the groove, and are clamped by one or more clamping components in the groove.

According to this embodiment, the number and arrangement of the buckle strips can be selected as needed to adapt them to the corresponding clamping components and grooves. Furthermore, this matching configuration between the grooves and buckle strips facilitates the direct positioning of the regions to be connected during assembly or disassembly without the need for visual guidance, relying only on tactile/feeling.

In a preferred embodiment of this application, the first clamping portion and the second clamping portion are respectively configured as a first clamping arm and a second clamping arm extending upwardly from the bottom surface of the corresponding accommodating area.

In a preferred embodiment of this application, each of the first clamping arm and the second clamping arm includes a connecting end connected to the bottom surface of the accommodating area; a free end opposite to the connecting end; and an extending portion extending between the connecting end and the free end, connecting the connecting end and the free end.

In a preferred embodiment of this application, in the natural state without external force applied, the first gap width between the free ends of the first clamping arm and the second clamping arm is less than the thickness of the corresponding buckle strip, and the second gap width between the connecting ends of the first clamping arm and the second clamping arm is greater than the thickness of the corresponding buckle strip.

According to this embodiment, the buckle strip can be firmly clamped between the free ends of the two clamping arms, and there is a certain flexible degrees at the connecting end positions of the clamping arms, facilitating disassembly.

In a preferred embodiment of this application, in the direction from the connecting end to the free end, the extending portion of the first clamping arm and the extending portion of the second clamping arm extend in directions inclined toward opposite sides of each other.

In a preferred embodiment of this application, the free end of at least one of the first and second clamping arms is formed with a protrusion extending transversely to the extending portion and toward the other clamping arm. The protrusion includes a clamping surface for clamping the corresponding buckle strip and a guiding surface for guiding the buckle strip into the space between the first clamping arm and the second clamping arm.

In a preferred embodiment of this application, the first clamping arm and the second clamping arm extend beyond the height of the first surface of the board material.

According to this embodiment, on the one hand, the length of the clamping arms can be increased, enhancing the clamping force; on the other hand, the mating area between the buckle strip and the clamping component can be enlarged, the allowable relative movement range is increased, redundant dimensions are provided, ensuring the buckle strip does not completely dislodge. In addition, the clamping arms protruding from the surface facilitate direct positioning through tactile feedback during assembly or disassembly.

In a preferred embodiment of this application, ribs for reinforcing the structure of the respective clamping arms are provided on the outer sides of the first clamping arm and/or the second clamping arm, away from each other.

In a preferred embodiment of this application, one or both side surfaces of the buckle strip are provided with stopper portion, which are configured to prevent the buckle strip from disengaging from the corresponding clamping component.

According to this embodiment, the stopper portion can further enhance the connection reliability of the connecting component.

In a preferred embodiment of this application, the stopper portion is formed as protruding ribs. These protruding ribs are located on the portion of the buckle strip near the connecting end of the clamping arms when in the connected state, and the protruding ribs extend continuously or are arranged discretely along the length direction of the buckle strip.

In a preferred embodiment of this application, one or more grooves are provided along the circumferential direction on the second surface of the board material, wherein the second surface is the surface opposite to the first surface of the board material covered by the fabric in the assembled state. Additionally, at least a portion of one or more buckle components is configured as buckle strips. In the connected state, the buckle strips are received in the corresponding grooves, extending continuously or arranged discretely along the direction of extension of the groove, and are clamped by one or more clamping components in the groove.

According to this embodiment, the fabric can cover the entire area of the first surface of the board material and bend around the surrounding sides. It is fixed at the edges of the opposite second surface through the clamping components and buckle strips, achieving wrap-around coverage of the first surface and the four circumferential sides.

In a preferred embodiment of this application, the first clamping portion is configured as one of the outer side wall and the inner side wall of the groove, and the second clamping portion is configured as a protrusion extending from the other of the outer side wall and the inner side wall of the groove toward the one of the outer side wall and the inner side wall. The protrusion includes a clamping surface for clamping the corresponding buckle strip and a guiding surface for guiding the buckle strip into the space between the first clamping portion and the second clamping portion.

In a preferred embodiment of this application, the clamping component is a plastic structure integrally formed with the board material as a whole, or a metal structure integrally cast with the board material as a whole.

In a preferred embodiment of this application, the clamping component is a plastic structure blow-molded, injection-molded, extrusion-molded, and/or wood-plastic molded with the board material.

According to this embodiment, the number of parts can be reduced, therefore decreasing assembly operations.

In a preferred embodiment of this application, the board material is a sofa leg board, and the fabric is the sofa fabric covering the surface of the leg board.

In a preferred embodiment of this application, the buckle components are sewn or adhered to the inner surface of the fabric.

Another aspect of this application provides the assembly of the leg board, which includes board materials and fabrics connected by the aforementioned connecting components.

### Illustration of the Attached Drawing

For a better understanding of the above and other purposes, features, advantages, and functions of the present application, reference may be made to the preferred embodiments illustrated in the accompanying drawings. The same reference symbols in the accompanying drawings refer to the same components. Technicians in this field should understand that the accompanying drawings are intended to illustrate the preferred embodiments of the present application, do not limit the scope of the application and that the various components in the drawings are not drawn to scale.
Figure 1 is a three-dimensional view of the board material in a preferred embodiment of this application, illustrating the first surface of the board material that will be covered by the fabric in the assembled state;
Figure 2 is a three-dimensional view showing another perspective of the first surface of the board material shown in Figure 1;
Figure 3 shows a partially enlarged view of the area A on the first surface of the board shown in Figure 1;
Figure 4 shows a partially enlarged view of the area A on the first surface of the board shown in Figure 2;
Figure 5 is a front view of an exemplary buckle strip;
Figure 6 is a three-dimensional view showing another perspective of the board material shown in Figure 1, illustrating the second surface of the board material opposite to the first surface;
Figure 7 shows another perspective three-dimensional view of the second surface of the board material shown in Figure 6;
Figure 8 shows a partially enlarged view of region C of the second surface of the board material shown in Figure 6;
Figure 9 shows a partially enlarged view of region D of the second surface of the board material shown in Figure 7;
Figure 10 shows a front view of another exemplary clamping component.

### Specific Implementations

The specific implementations of the present application will be described in detail with reference to the accompanying drawings. The description here is only based on the preferred embodiment of the present application. Technicians in this field may think of other ways to implement the present application on the basis of the preferred embodiment, which also falls within the scope of the present application.

In the upholstery process of furniture such as sofas, over-reliance on manual operation techniques through conventional methods of using a nail gun to fix board materials or to connect with fabrics results in low efficiency, unreliable product quality, and is unfavorable for mass production, standardization, and modular production. Additionally, there are usually issues of non-detachability, inconvenience in changing and maintaining fabrics, and other related problems. In addition, the existing technology method of fixing clamping strips on the fabric and then attaching the clamping strips to the outer surfaces of board materials or other framework structures typically results in insufficient connection strength, and unexpected issues such as relative displacement or detachment between the board materials and fabrics quickly occur.

To address the problems in the prior art, this application provides a connecting component between board materials and fabrics, the connecting component includes one or more elastic components arranged on the board, wherein each elastic component is provided with a first elastic portion and a second elastic portion which are oppositely arranged; and one or more buckle components fixedly connected to the fabric, wherein one or more buckle components can be detachably connected to one or more clamping components, therefore allowing the fabric and board materials to be detachably connected. In some embodiments, the elastic component can be constructed as a clamping component, wherein the first elastic portion and the second elastic portion are respectively constructed as the first clamping portion and the second clamping portion biased toward each other, and in the connected state, the buckle components are clamped between the first clamping portion and the second clamping portion of the respective clamping components. In other embodiments, the first elastic portion and the second elastic portion of the elastic component can also be constructed as biased away from each other, and in the connected state, the buckle components are enveloped externally by both the first elastic portion and the second elastic portion, and are fixed by the biasing of the elastic component. This application further provides a sofa leg board that includes board materials and fabrics connected through the aforementioned connecting component.

The following provides a detailed introduction to the contents of the present application in conjunction with various embodiments shown in the accompanying drawings. Directional terms such as "up", "middle", "down", "top side", "bottom side", "upper part", "lower part", etc., used in the following are based on the scenario where the board materials and fabrics are in an assembled state and the board materials usually are placed horizontally on their maximum surface on the bottom surface.

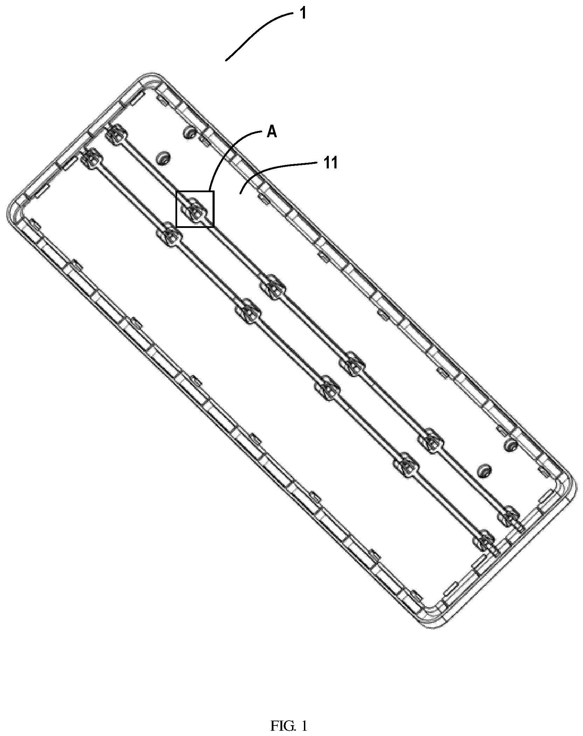

Figure 1 is a three-dimensional view of an exemplary embodiment of the board material, illustrating the first surface 11 of board material 1, which is the first surface 11 that contacts and is covered by the fabric when the board material is assembled with the fabric (not shown in the figure), i.e., the upper surface of the board material when customarily placed. In this embodiment, board material 1 is a sofa leg board, which in a non-use state is stored extending vertically on the front side of the sofa, therefore at least partially forming the front panel component of the sofa. In this storage state, the first surface 11 faces forward; when the user needs to use the leg board, it can be manually or automatically operated to flip to a state where the aforementioned first surface 11 faces upward, therefore allowing the user to place their feet on the first surface 11 covered by the fabric. Of course, the aforementioned board material can also be various components that those skilled in the art can think of, including but not limited to board-like elements used in furniture and/or other framework structures, such as sofa backrests, sofa seat frames, front baffles, armrest skeletons, bed headboards, bed frames, tabletops, seats, etc. Furthermore, the fabric is various fabrics that those skilled in the art can think of for covering the aforementioned board materials, such as sofa leather covers or cloth, etc.

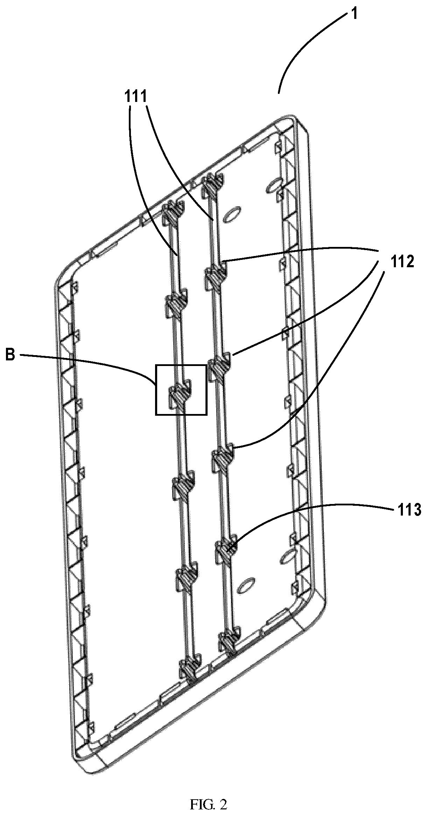

Furthermore, Figure 2 shows another perspective three-dimensional view of the first surface of the aforementioned board material, which illustrates the aforementioned elastic component formed on board material 1(in this embodiment, the elastic component is constructed as a clamping component), and the clamping component is equipped with the aforementioned buckle components fixedly connected to the fabric (not shown in the figure). Specifically, referring to Figure 2, in this exemplary embodiment, preferably, two grooves 111 are provided on the first surface 11 of board material 1, each groove being parallel to the length edge of board material 1, and extending continuously from one width edge of the board material to the other width edge. The arrangement of such grooves facilitates easier positioning of the connection locations during the assembly process, allowing workers to locate the connection positions on the board material quickly without the need for visual alignment, relying only on sensory/tactile feedback (which is very advantageous during the assembly or use of board materials, as board materials are sometimes assembled in locations that are not easily visible), therefore assembling the fabric with the board material. In addition, in this embodiment, the number of grooves is two, which allows workers or users to select the connection positions as needed, therefore flexibly controlling the degree of fabric tension, and also flexibly providing configurations with different numbers and/or positions of tension lines on the upper surface 11.

It can be understood that the arrangement of the grooves mentioned above is only exemplary and not restrictive. Those skilled in the art can adjust or modify the groove arrangement as needed, for example, arrange a different number of grooves on the first surface, or arrange at least some grooves to extend along the width edges of the board material, or arrange each groove to be discontinuous (discrete).

Furthermore, referring to Figures 2 to 4, each groove 111 is provided with one or more accommodating areas 112 with increased width, wherein the width of the accommodating area in the direction transverse to the direction of extension of the groove is greater than the width of the groove, and the accommodating area is used to house one or more clamping components 113. Those skilled in the art can select the number of accommodating areas and corresponding clamping components, as well as their arrangement relationship with the grooves, according to actual needs. For example, in addition to the one-to-one arrangement shown in this embodiment, multiple clamping components can be arranged in each accommodating area to increase the clamping force; or, it is even possible to not set grooves, but directly arrange multiple regions 112 dispersedly on the first surface 11 of the board material, each region housing one or more clamping components 113. In addition, the shape of the accommodating area 113 can be selected as needed, as long as it can adapt to the corresponding clamping components. The above-mentioned variations in the arrangement of grooves, accommodating areas, and clamping components do not depart from the scope of protection of this application.

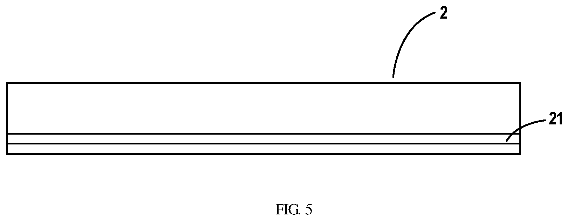

Furthermore, the buckle components mentioned above can be constructed as buckle strip 2 as shown exemplarily in Figure 5. The buckle strip is fixedly connected (for example, sewn or bonded) to the fabric, such that when the buckle strip 2 is clamped into position by the clamping component 113, the fabric is tightened and fixed onto the board material 1, therefore covering the board material. It can be understood that the number and arrangement of buckle strips 2 can be determined according to the number and/or arrangement methods of the grooves mentioned above, accommodating areas, and/or clamping components, for example, but not limited to buckle strips corresponding one-to-one with the number of grooves, and in the connected state, are arranged continuously or discretely along the direction of extension of the groove; or the number of buckle strips can also match the accommodating areas and/or clamping components, and those skilled in the art can select as needed.

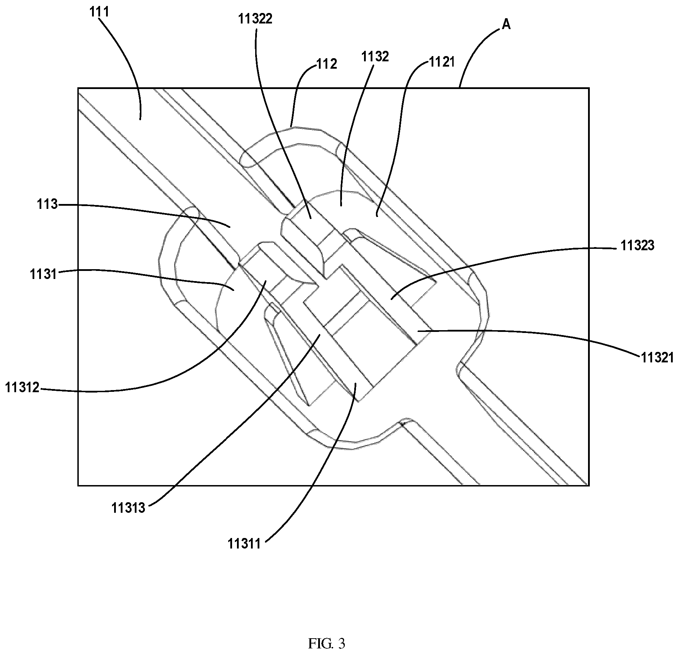

Referring to Figure 3, in this embodiment, preferably, the first clamping portion and the second clamping portion of the clamping component 113 are respectively constructed as the first clamping arm 1131 and the second clamping arm 1132 extending upwards from the bottom surface 1121 of the accommodating area 112. Furthermore, preferably, each of the first clamping arm 1131 and the second clamping arm 1132 includes a connecting end 11311, 11321 connected to the bottom surface 1121 of the accommodating area 112; a free end 11312, 11322 opposite to the connecting end; and an extending portion 11313, 11323 extending between the connecting end and the free end, connecting the connecting end and the free end.

Furthermore, preferably, in the natural state without external force applied, i.e., in the state without the buckle strip inserted as shown in Figure 3, the first gap width between the free end 11312 of the first clamping arm 1131 and the free end 11322 of the second clamping arm 1132 is less than the thickness of the corresponding buckle strip 2 to be mated, and the second gap width between the connecting end 11311 of the first clamping arm and the connecting end 11321 of the second clamping arm is greater than the thickness of the corresponding buckle strip 2. This design of the gap width between the free ends of the clamping arms ensures that when the buckle strip is inserted between the clamping arms 1131, 1132, the free ends of the upper portions of the elastic clamping arms are spread apart by the buckle strip, generating a rebound force, and the buckle strip is securely held in position between the two clamping arms under the clamping action of the rebound force, making it difficult to loosen. When it is necessary to assemble or disassemble the buckle strip, a greater external force must be used to insert or remove the buckle strip, which ensures the reliability of the connection between the fabric and the board material. At the same time, designing the connecting ends of the lower portions of the clamping arms with a gap width more significant than the gap width of the free ends, preferably more significant than the thickness of the aforementioned buckle strip 2, provides a certain degree of freedom for the buckle strip, preventing it from getting stuck between the clamping arms, therefore facilitating assembly and disassembly.

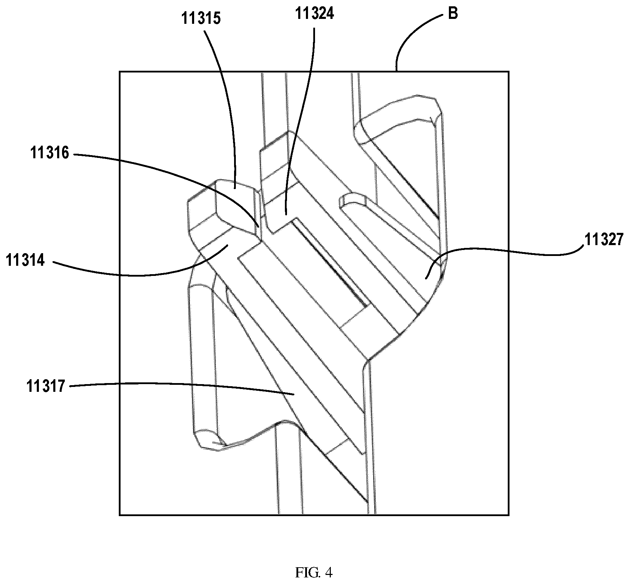

Various configurations of clamping arms can be designed to achieve the aforementioned first gap width being less than the buckle strip thickness and the second gap width being more significant than the gap width. As an exemplary embodiment, the clamping arms can be set such that, in the direction from the connecting end to the free end, the extending portions 11313, 11323 of the first clamping arm 1131 and the second clamping arm 1132 extend toward the opposite sides (i.e., the other clamping arms) in directions inclined from the vertical. As another example, referring to Figure 4, the free end 11312, 11322 of at least one of the first clamping arm 1131 and the second clamping arm 1132 forms protrusions that extend along the extending portions 11313, 11323 of the clamping arms approximately transversely to the clamping arms and in the direction toward the other clamping arm. On the protrusions 11314, 11324 are formed clamping surfaces 11316 for clamping the corresponding buckle strip 2 and guiding surfaces 11315 for guiding the buckle strip into the space between the first clamping arm and the second clamping arm. Wherein the clamping surfaces extend substantially parallel to the groove walls, and the guiding surfaces extend obliquely between the clamping surfaces and the tops of the free ends. In some cases, when protrusions are formed on both clamping arms, the first gap width is formed between the two opposite clamping surfaces on the two protrusions, and this width is less than the thickness of the corresponding buckle strip; in other cases, when a protrusion is formed on only one of the two clamping arms, the clamping surface of that protrusion and the corresponding portion of the free end of the other clamping arm form the aforementioned first gap width, which is less than the thickness of the buckle strip.

The structures mentioned above of the clamping arms are not intended to limit the scope of this application but are merely exemplary. Those skilled in the art can select appropriate structures for the clamping components as needed, such as setting both the first clamping portion and second clamping portion as leaf springs, or arranging biasing components, such as tension springs that bias the two clamping portions toward each other between the first clamping portion and second clamping portion. These embodiments do not depart from the scope of protection of this application.

Furthermore, preferably, the first clamping arm 1131 and the second clamping arm 1132 extend beyond the height of the first surface 11 of board material 1, that is, protruding from the first surface 11. On the one hand, this can increase the length of the clamping arms, enhancing the clamping force; on the other hand, it can also enlarge the mating area between the buckle strip and the clamping component (i.e., the area where the buckle strip is inserted into the clamping component), increase the allowable relative movement range, provide redundant dimensions, and ensure that the buckle strip does not wholly dislodge. In addition, the protruding clamping components also facilitate direct positioning through tactile feedback during assembly or disassembly.

Furthermore, preferably, ribs 11317 and 11327 are provided on the outer/back sides of the first clamping arm 1131 and/or the second clamping arm 1132 to reinforce the respective clamping arm structures. The ribs ensure that the clamping arms are less likely to break when subjected to the force of inserting the buckle strip, and guarantee a stronger clamping force, preventing the clamping arms from easily deforming in the direction opposite to the buckle strip when under stress, which could otherwise lead to the buckle strip detaching. It can be understood that those skilled in the art may also set other reinforcing structures as needed, as long as they can ensure that the clamping arms generate the necessary clamping force and reduce the likelihood of the clamping arms breaking.

Furthermore, preferably, the length of the buckle strip is the same as or close to the length of the corresponding groove 11, therefore allowing the entire buckle strips to be easily hooked into the groove and held in place by the clamping components 113 in the groove. Of course, the length and/or structure of the buckle strip, can be set as needed, for example, it can be arranged continuously or discretely to match the grooves, or the length of the buckle strip can be set differently from the length of the groove. These variations do not depart from the scope of protection of this application.

Preferably, stopper portions are provided on one side surface or both side surfaces of the buckle strip 2, to further prevent the buckle strip from disengaging from the corresponding clamping components, such as detaching between the two clamping arms 1131 and 1132, especially avoiding the buckle strip from falling off from the free ends of the clamping arms during furniture transportation or use when subjected to specific external forces. In one example, the stopper portion is constructed as protruding ribs 21, which are located on the portion of the buckle strip 2 near the connecting ends of the clamping arms 11311, 11312 (i.e., near the bottom surface 1121 of the accommodating area with increased width), and are arranged continuously or discretely along the length direction of the buckle strip. Of course, the aforementioned stopper portion can also be various other structures, for example, they can be hook parts extending upwardly from the bottom side near the connecting ends of the clamping arms on the buckle strip, or the sides of the buckle strip can be configured as stepped structures. These variations all fall within the scope of protection of this application.

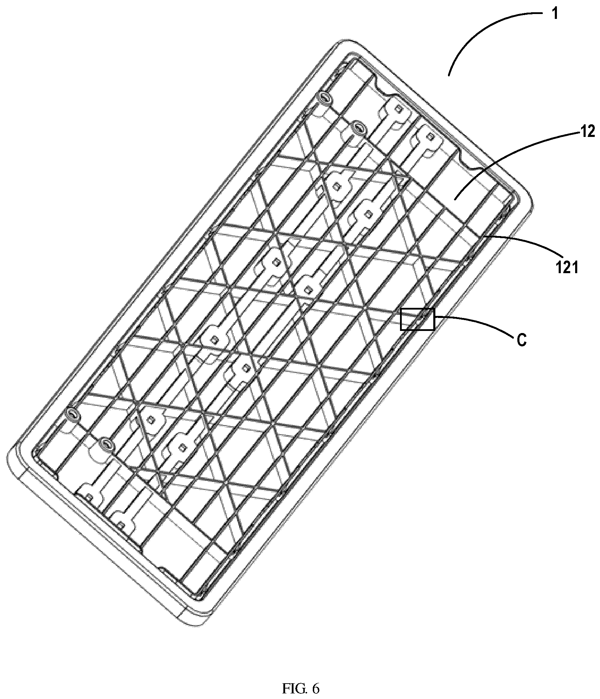

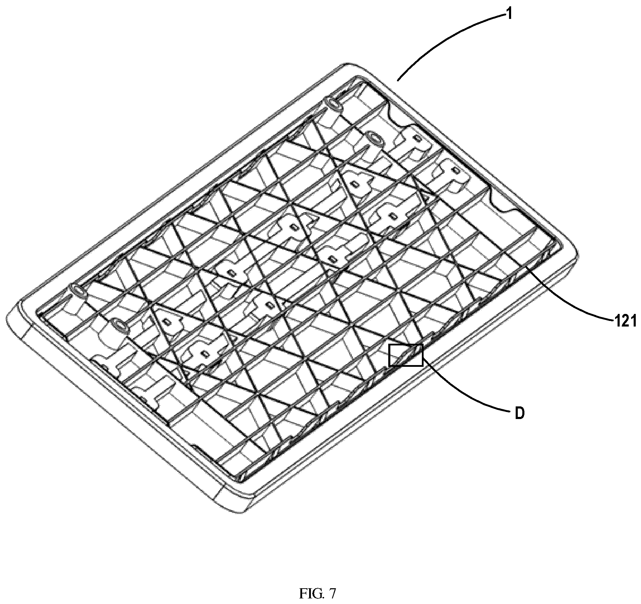

Next, referring to Figures 6 to 9, the figures illustrate another exemplary embodiment of the clamping component.

Figures 6 to 7 show the second surface 12 of board material 1, opposite to the first surface 11 as described above, i.e., the lower surface of the board material when customarily placed. The second surface 12 is provided with one or more grooves 121 along the circumferential direction. It can be understood that, similar to grooves 111 on the aforementioned first surface 11, the number of grooves 121 can also be one or more, and they can be arranged continuously or discretely along the circumferential direction of the board material. Those skilled in the art can adjust the groove arrangement as needed. In a preferred embodiment, groove 121 is a groove extending continuously around the circumferential edge of the second surface 12 of the board material, as shown in Figures 6 to 7, continuously extending one complete loop near the circumferential edge. This continuous arrangement facilitates easier positioning of connection locations during the assembly process, therefore allowing the fabric and board material to be assembled solely through tactile feedback.

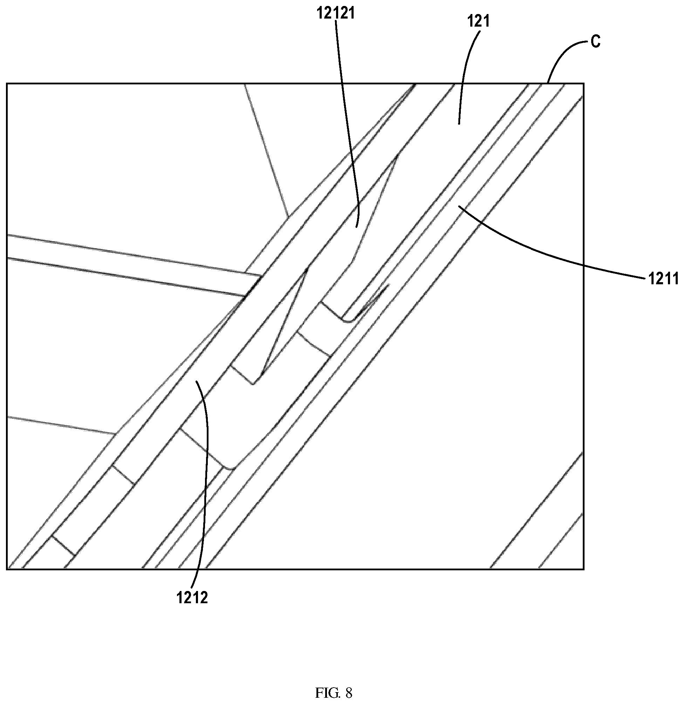

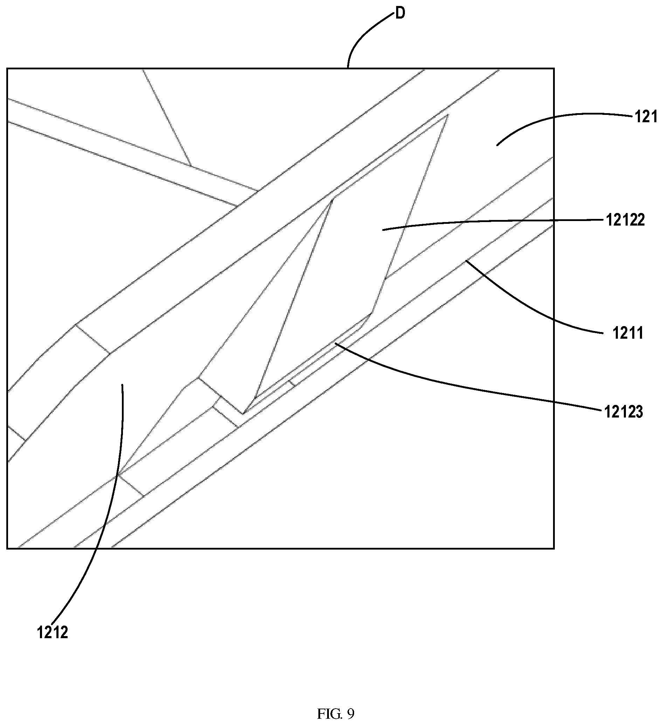

Furthermore, referring to Figures 8 and 9, groove 121 has an outer side wall 1211 on the side near the edge of the board material and an inner side wall 1212 on the side near the center of the board material. On the inner side wall 1212, a protrusion 12121 extending approximately transversely to the direction of the groove and toward the outer side wall is formed. This protrusion features a clamping surface 12123 for clamping the corresponding buckle strip and a guiding surface 12122 between the clamping portion and the protrusions for guiding the buckle strip into the clamping component. Wherein the clamping surface extends substantially parallel to the directions of the inner side wall and outer side wall, and the guiding surface extends inclinatory between the clamping surface and the inner side wall. In this embodiment, the first clamping portion is constructed as the outer side wall 1211, and the second clamping portion is constructed as the protrusion 12121 on the inner side wall 1212. It can be conceived that in other embodiments, protrusions extending inwardly can be formed on the outer side wall, with the protrusions and the inner side wall being respectively constructed as the first clamping portion and second clamping portion; Alternatively, protrusions extending toward each other can be set on both the inner and outer side walls, with the two protrusions serving as the first clamping portion and second clamping portion respectively; alternatively, neither the inner nor the outer side walls are provided with clamping portions; instead, they are constructed to extend inclinatory toward each other (with the inner and outer side walls themselves acting as the first clamping portion and second clamping portion), allowing the buckle strip to be directly clamped by the inner and outer side walls themselves after insertion. Those skilled in the art can make various adjustments and modifications as needed, all of which remain within the scope of protection of this application.

Additionally, it can be understood that the aforementioned buckle strip 2 can all be used in conjunction with the clamping components shown in Figures 6 to 9. In addition, the embodiments described above with respect to Figures 1 to 4 (i.e., setting grooves 111 and corresponding clamping components 113 on the first surface 11) and with respect to Figures 6 to 9 (i.e., setting grooves 121 and corresponding clamping components on the second surface 12) can be arranged in combination. In a preferred embodiment, when used in combination, the fabric can first be placed over the first surface 11 of board material 1; then, the edges of the fabric are folded from the side surfaces around the board material, wrapping around the side surfaces to reach the second surface 12; next, the buckle strips fixedly connected to the edges of the fabric are inserted into the circumferential grooves 121 on the corresponding second surface, and are clamped and fixed by the clamping components on the second surface 12; finally, the buckle strips fixed near groove 111 on the first surface 11 of the fabric are inserted into the corresponding grooves 111 on the first surface, and are clamped and fixed by the clamping components 113 on the first surface, therefore tightening the fabric and forming line-like shapes on the first surface 11. This combination allows the fabric to wrap the user-facing side surface of the board material completely, fixes the peripheral edges of the fabric on the opposite side surface, and further tightens the fabric and forms shapes on the user-facing side surface. The entire upholstery process is simple and easy to operate, differing from traditional nailing assembly methods. It offers higher flexibility, is conducive to standardized and mass production, and can be easily disassembled and adjusted during assembly and use.

Preferably, the various clamping components described above are plastic structures integrally formed with the board material as a whole, or metal structures integrally cast with the board material as a whole. For example, the clamping components can be plastic structures blow-molded, injection-molded, wood-plastic molded, or extrusion-molded with the board material as a whole. Those skilled in the art can select appropriate molding methods and corresponding materials as needed.

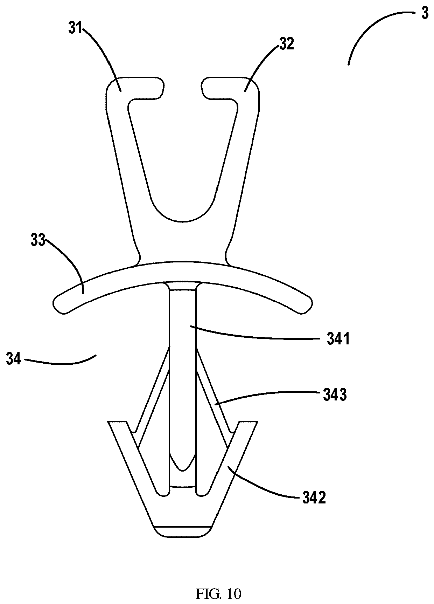

Next, referring to Figure 10, the figure illustrates another exemplary embodiment of the elastic component (similar to the aforementioned embodiments; in this embodiment, the elastic component is still described using the clamping component as an example). Unlike the clamping components integrally molded with the board material, in this embodiment, the clamping component 3 is an independent part molded separately from the board material 1, which can be detachably fixed to the board material 1, therefore enabling more flexible assembly for application in various scenarios. By providing detachable clamping components, the assembly flexibility between components is enhanced, allowing workers or users to match the detachable clamping components with the corresponding preset structures on the board material as needed, therefore achieving various connection arrangements.

Clamping component 3 includes a first clamping portion and a second clamping portion arranged opposite to each other, which can be constructed as the first clamping arm 31 and the second clamping arm 32, similar to the aforementioned clamping component 113. Similarly, the clamping arms 31 and 32 can be detached to one or more buckle components fixedly connected to the fabric (for example, the aforementioned buckle strip 2), therefore allowing the fabric to be detachably connected to the board material. The specific structure of the clamping arms in this embodiment can be constructed similarly to the clamping arms described above concerning clamping component 113, and will not be further elaborated here.

Furthermore, preferably, clamping component 3 includes a base 33, which is preferably constructed as a flat panel structure or a panel structure with a curved surface, allowing it to conform to the surface of the corresponding board material when joined. The first clamping arm 31 and the second clamping arm 32 extend from one side of the base 33 toward the first direction (i. e., the direction away from the board material in the assembled state). Clamping component 3 also includes a joint portion 34 extending from the opposite side of the base toward a second direction opposite to the first direction, which is configured to detachably engage with a corresponding receiving portion (not shown) provided on the corresponding surface of the board material, therefore detachably fixing the clamping component to the board material.

In a preferred embodiment, the joint portion 34 includes a cylindrical portion 34 extending from the base 33 toward the second direction, and one or more elastic arms 342 arranged around the cylindrical portion, extending from the free end of the cylindrical portion toward the base 33. Accordingly, the receiving portion is constructed as a hole (not shown) provided on one side surface of the board material, and one or more elastic arms 342 are constructed such that when the joint portion is inserted into the corresponding receiving portion on the board material, they elastically bias against the inner side walls of the hole to at least partially prevent relative movement between the joint portion and the receiving portion, particularly along the axial direction of the hole.

Furthermore, preferably, the joint portion 34 of the clamping component also includes one or more elastic support arms 343 extending from the peripheral side surface of the cylindrical portion 341 to the free ends of one or more elastic arms 342, and being connected to the free ends of these elastic arms. The support arms further increase the biasing pressure of the elastic arms, allowing the joint portion and the receiving portion to mate firmly and resist loosening. The triangular structure formed collectively by the support arms, elastic arms, and cylindrical portion enhances the overall strength of the joint portion, making it less prone to breakage and ensuring a stable and reliable structure.

In another preferred embodiment, the joint portion can also be a threaded rod structure, and correspondingly, the receiving portion on the board material can be a threaded hole structure arranged to match. It can be conceived that those skilled in the art may adjust or modify the aforementioned joint portion and receiving portion as needed, and these modifications fall within the scope of protection of this application.

It can be understood that the various embodiments described above can be used in combination. For example, one can set both integrally molded clamping components on the board material (as shown in Figures 1 to 4 and/or Figures 6 to 9) and also preset receiving portions designed to cooperate with independently molded detachable clamping components (as shown in Figure 10), therefore allowing workers to choose the matching method as needed freely. All such combination modes fall within the protection scope of the claims of this application.

In addition, although the above connection structures detailed in the drawings consist of inwardly biased clamping components and buckle strips clamped between the clamping components, in other embodiments, the elastic component can also be outwardly biased types. For example, they can have the first elastic portion and the second elastic portion biased outwardly away from each other, and correspondingly, the buckle strips connected to the fabric can be constructed as overlapping components that are fitted externally around the elastic component during assembly. Those skilled in the art can select suitable combinations as needed.

The above description of the various embodiments of the present application is provided to a person of ordinary skill in the relevant art for the purpose of description. It intends to exclude or limit the present application to a single disclosed embodiment. As above, ordinary technicians in this field will understand the various alternatives and modifications of the present application. Thus, although some alternative embodiments have been described in detail, ordinary technicians in this field will understand or relatively quickly develop other embodiments. This application is intended to include all alternatives, modifications and variations of the present application described herein, as well as other embodiments falling within the spirit and scope of the present application described above.

## Claims

1. An elastic component for connecting a board material and a fabric comprising:
a first elastic portion and a second elastic portion are opposite to each other, a
connecting component between the board material and the fabric
The elastic component can be detachably fixed to the board material,
Wherein the first elastic portion and the second elastic portion can be detached to one or more buckle components that are fixedly connected to a fabric, therefore allowing the fabric and the board material to be detachably connected.

2. The elastic componentof claim 1, wherein the elastic component is constructed as a clamping component, the first elastic portion and the second elastic portion are respectively constructed as a first clamping portion and a second clamping portion biased toward each other, and in the connected state, a clip is clamped between the first clamping portion and the second clamping portion of the corresponding clamping components.

3. The elastic component of claim 1, wherein the first elastic portion and the second elastic portion are constructed as biased away from each other, and in the connected state, the buckle components are enveloped externally by both the first elastic portion and the second elastic portion, and are fixed by the biasing of the elastic component.

4. The elastic component of claim 2, wherein the clamping component includes a base, wherein the first clamping portion and the second clamping portion are constructed as a first clamping arm and a second clamping arm extending from one side of the base toward the first direction, and
Additionally, the clamping component includes a joint portion extending from the other side of the base toward a second direction opposite to the first direction, wherein the joint portion is configured to detachably cooperate with a receiving portion provided on the surface side of the panel, to fix the clamping component to the panel detachably.

5. The elastic component of claim 4, wherein the joint portion includes:
A cylindrical portion extending from the base toward the second direction; and
One or more elastic arms arranged around the cylindrical portion, extending from the free end of the cylindrical portion toward the base,
wherein the receiving portion is constructed as a hole (not shown) provided on one side surface of the board material, and wherein one or more elastic arms are constructed such that when the joint portion is inserted into the corresponding receiving portion on the board material, they elastically bias against the inner side walls of the hole to at least partially prevent relative movement between the joint portion and the receiving portion.

6. The elastic assembly of claim 5, wherein the joint portion further comprises a free side extending from the peripheral surface of the cylindrical portion to one or more elastic arms, and one or more elastic support arms connected to the free side.

7. The elastic component of claim 4, wherein the joint portion and the receiving portion are a threaded rod and a corresponding threaded hole structure respectively.

8. A connecting component between a board material and a fabric, wherein that the connecting component includes:
One or more elastic components set on the board material, each elastic component having a first elastic portion and a second elastic portion arranged opposite to each other; and
One or more buckle components fixedly connected to the fabric,
Wherein one or more buckle components can be detachably connected to one or more elastic components, therefore allowing the fabric and the board material to be detachably connected.

9. The connecting component, according to claim 8, wherein that the elastic component is constructed as clamping components, wherein the first elastic portion and the second elastic portion are respectively constructed as the first clamping portion and the second clamping portion biased toward each other, and
In the connected state, the clip is clamped between the first clamping portion and the second clamping portion of the corresponding clamping component.

10. The connecting component, according to claim 8, wherein that the first elastic portion and the second elastic portion are constructed as biased away from each other, and
In the connected state, the buckle components are enveloped externally by both the first elastic portion and the second elastic portion, and are fixed by the biasing of the elastic component.

11. The connecting component, according to claim 9, wherein that the assembled state of the panel covered by the fabric, one or more grooves extending along the length direction of the panel are provided on the first surface and each groove is provided with one or more accommodating areas arranged along the direction of extension of the groove for accommodating one or more clamping components, wherein the width of each accommodating area transverse to the direction of extension of the groove is greater than the width of the groove, and each accommodating area is constructed to accommodate one or more clamping components.

12. The connecting component, according to claim 11, wherein in that the least a portion of one or more buckle components is constructed as buckle strips, and in the connected state, the buckle strips are received in the corresponding grooves extending continuously or discretely along the direction of extension of the grooves, and are clamped by one or more clamping components in the grooves.

13. The connecting component, according to claim 12, wherein in that the first clamping portion and the second clamping portion are constructed as the first clamping arm and the second clamping arm extending upwardly from the bottom surface of the respective accommodating area.

14. The connecting component, according to claim 13, wherein in that the each of the first clamping arm and the second clamping arm includes:
A connecting end connected to the bottom surface of the accommodating area;
A free end opposite to the connecting end; and
An extending portion between and connecting the connecting end and the free end

15. The connecting component, according to claim 14, wherein in that the natural state without external force applied, the first gap width between the free end of the first clamping arm and the free end of the second clamping arm is less than the thickness of the corresponding buckle strip, and the second gap width between the connecting end of the first clamping arm and the connecting end of the second clamping arm is greater than the thickness of the corresponding buckle strip.

16. The connecting component, according to claim 15, wherein in that the direction from the connecting end to the free end, the extending portion of the first clamping arm and the extending portion of the second clamping arm extend in mutually opposing inclined directions.

17. The connecting component, according to claim 15, wherein in that the free end of at least one of the first clamping arm and the second clamping arm forms a protrusion extending transversely to the extending portion and toward the other clamping arm direction, wherein the protrusion includes a clamping surface for clamping the corresponding buckle strip and a guiding surface for guiding the buckle strip into the space between the first clamping arm and the second clamping arm.

18. The connecting component, according to claim 13, wherein in that the first clamping arm and the second clamping arm extend beyond the height of the first surface of the board material.

19. The connecting component, according to claim 13, wherein in that the ribs are provided on the outward sides of the first clamping arm and/or the second clamping arm away from each other, reinforcing the respective clamping arm structures.

20. The connecting component, according to claim 15, wherein in that the one side surface or both side surfaces of the buckle strip are provided with stopper portion, which are constructed to prevent the buckle strip from disengaging from the corresponding clamping components.

21. The connecting component, according to claim 20, wherein in that the stopper portion are constructed as protruding ribs, wherein the protruding ribs are located on the portion of the buckle strip near the connecting ends of the clamping arms, and the protruding ribs extend continuously or discretely along the length direction of the buckle strip.

22. The connecting component, according to claim 9, wherein in that,
Wherein in that the second surface of the board material is provided with one or more grooves along the circumferential direction, wherein the second surface is the surface opposite to the first surface of the board material covered by the fabric in the assembled state, and
Wherein at least a portion of one or more buckle components is constructed as buckle strips, and in the connected state, the buckle strips are received in the corresponding grooves extending continuously or discretely along the direction of extension of the grooves, and are clamped by one or more clamping components in the grooves.

23. The connecting component, according to claim 22, wherein in that the first clamping portion is constructed as one of the outer side wall and the inner side wall of the groove, and the second clamping portion is constructed as a protrusion extending from the other of the outer side wall and inner side wall of the groove toward the first of the outer side wall and inner side wall of groove, wherein the protrusion has clamping surfaces for clamping the corresponding buckle strip and guiding surfaces for guiding the buckle strip into the space between the first clamping portion and the second clamping portion.

24. The connecting component, according to any one of claims 8 to 23, wherein in that the clamping components are plastic structures integrally molded with the board material as a whole, or metal structures integrally cast with the board material as a whole.

25. The connecting component, according to claim 24, wherein in that the clamping components are plastic structures blow-molded, injection-molded, extrusion-molded, and/or wood-plastic molded with the board material as a whole.

26. The connecting component, according to any one of claims 8 to 23, wherein in that the board material is a sofa leg board, and the fabric is a sofa fabric covering the surface of the leg board.

27. The connecting component, according to any one of claims 9 to 23, wherein in that the buckle components are sewn or bonded to the inner surface of the fabric.

28. A sofa leg board assembly, wherein in that the leg board assembly includes board materials and fabrics connected through the connecting component according to any one of claims 8 to 27.
